# EUROPEAN PATENT SPECIFICATION

(11) **EP 2 500 078 B1**
(45) Date of publication and mention of the grant of the patent: **08.04.2020**
(21) Application number: 12000802.4
(22) Date of filing: 07.02.2012
(51) Int. Cl.: B01D 46/00, F01N 3/022, B01D 46/24, F01N 3/023

(54) **METHOD AND APPARATUS FOR REGENERATING USED PARTICULATE FILTERS**
VERFAHREN UND VORRICHTUNG ZUR REGENERIERUNG GEBRAUCHTER PARTIKELFILTER
PROCÉDÉ ET APPAREIL DE RÉGÉNÉRATION DES FILTRES À PARTICULES UTILISÉS

(30) Priority: 07.02.2011 IT MI20110177
(43) Date of publication of application: 19.09.2012
(73) Proprietor: Nuova A.F.R. Air Filter Recycling S.R.L., 20060 Pessano con Bornago (MI) (IT)
(72) Inventor: RIZZITANO, Annunziata, 20875 Burago di Molgora MB (IT)
(74) Representative: Pes, Matteo

(56) References cited:
- EP-A1- 1 060 780
- EP-A1- 1 252 919
- WO-A1-02/094415
- WO-A1-03/093659

## Description

### Technical field of the invention

The present invention relates to a method and an apparatus for regenerating particulate filters and catalytic devices of vehicles.

In motor vehicles it is known to use devices the function of which is to intercept the exhaust gases of the engine to reduce as much as possible the pollutants present therein. Catalytic devices are widely used in petrol-driven vehicles and in diesel oil-driven vehicles catalytic devices are used in combination with particulate filters.

Normally, catalytic devices and particulate filters are arranged in series along the exhaust gases path of the diesel vehicle, and they can be separate and distant or incorporated in a single box-shaped casing.

Catalytic devices, or more simply catalysts, are catalytic converters that promote the complete oxidation and reduction of the exhaust gases of the vehicle; uncombusted hydrocarbons (CₙHₘ), nitrogen oxides (NO) and carbon monoxide (CO) are converted into carbon dioxide (CO₂), water (H₂O) and nitrogen (N₂). Normally, catalysts consist of a body, made of metal or ceramic, equipped with a plurality of channels having a small diameter. The exhaust gases, forced to pass through the channels, react with the material of the catalyst as explained above.

Particulate filters are devices arranged on diesel vehicles to intercept and trap polluting particles, mostly fine powders generically identified by the term *particulate,* generated by the combustion of diesel oil.

Particulate filters were devised for the first time by the automobile group PSA - Peugeot Citroën, which used the acronym FAP to identify them, and subsequently they were also developed by other manufacturers with different solutions, for example by the German automobile firms, and identified by the acronym DPF (*Diesel Particulate Filter).*

In general, a particulate filter comprises a porous body, or one provided with a plurality of channels having a small diameter, made of silicon carbide; the exhaust gases expelled by the engine of the vehicle first pass through the catalytic device and then the body of the particulate filter, which traps the polluting particles. Over time the polluting particles intercepted build up in the porosities or in the channels of the filter, tending to obstruct it; in order to limit as much as possible the build up of aggregates of particles, the filter is periodically subjected to a regeneration process while the vehicle is running (about every 600÷1000 km).

In practice, the filter is regenerated by periodically burning the particles trapped inside it: the control unit of the vehicle controls a post-injection of diesel oil to increase the temperature of the filter beyond 450°C; at this point an additive, cerium oxide (cerine), is introduced into the filter, which reduces the combustion initiation temperature of the particles of particulate to about 450°C. The complete combustion of the polluting particles during the normal use of the vehicle, and an at least partial regeneration of the filter, are thus obtained.

When diesel vehicles have high mileage, greater than 150000 km, the regeneration described above may prove ineffective. The accumulation of particles in the filter has negative effects on the operation of the engine, on fuel consumption and on the pollution generated.

Processes and apparatuses for regenerating used particulate filters have been proposed that provide washing the filter body with water or with other washing liquids.

European patent EP 1302232 describes a regeneration method that provides dismounting the particulate filter from the vehicle and immersing the filter in a washing liquid for a sufficient time to completely fill the channels of the filter and promote the action of the washing liquid. The method also provides the optional steps of:
- stirring the washing liquid, for example with a mechanical stirrer or with ultrasounds,
- washing the filter with a flow of the washing liquid flowing through the filter body, and
- heating the washing liquid to a temperature substantially higher than room temperature when the filter is immersed in the liquid.

Before being subjected to washing with the liquid, preferably the filter undergoes a thermal heating treatment; in practice, the filter is heated in a furnace to a high temperature or it has a flow of hot air passed therethrough; in both cases the high temperature contributes to the combustion of the particles present in the filter. At the end of the washing cycle the filter is rinsed and dried.

European patent EP 1252919 describes a method for regenerating particulate filters that provides washing with water.

The filter to be regenerated, previously dismounted from the vehicle, is positioned vertically suspended on a collection tank of the washing water oriented so that the outlet section of the filter, i.e. the section from which the exhaust gases come out from the filter during normal use thereof, remains facing upwards and the inlet section of the filter, i.e. the section from which the exhaust gases come into the filter during the normal use thereof, remains facing downwards, i.e. towards the collection tank.

Water is introduced into the filter at the relative outlet section, i.e. in countercurrent with respect to the direction of movement of the exhaust gases, travels the channels of the filter body to be expelled through the inlet section and be discharged into the collection tank.

The flow of washing water is not constant over time, but the filter is subjected to successive washing cycles. During a washing cycle a flow of water at a pressure of about 2 bar constantly passes through the filter. For a time corresponding to about the first half of the duration of the washing cycle a first pulse of air compressed to a pressure of about 1 bar is conveyed in the filter together with the washing water, in the same direction, in order to make it easier for all of the channels of the filter to be passed through by the water; for a time corresponding to about the second half of the duration of the washing cycle, a second pulse of air compressed to a pressure of about 2 bar is conveyed in the filter together with the washing water, in the same direction, to promote the removal of the particulate by the water.

Between two consecutive washing cycles the filter is not passed through by the flow of water or compressed air. About 25 washing cycles are provided for a complete regeneration of a filter. The filter is heated to a high temperature in a furnace before dealing with the washing cycles, to promote the detachment of the particulate from the filter body, and after the washing cycles, for final drying.

American patent US 7,326,265 describes a method for regenerating a particulate filter in which a flow of water and a flow of gas alternately pass through the filter body. The flow of washing water has a pressure preferably comprised in the range 15÷25 bar and a flow rate comprised in the range 200÷600 l/min; the flow of gas has a pressure greater than 2 bar and a flow rate greater than 3000 l/min.

International patent application WO 02/094415 describes a method and an apparatus for regenerating a particulate filter, wherein a flow of liquid and a flow of gas simultaneously pass through the filter body according to successive pulses.

The gas-washing liquid mixture has a pressure comprised in the range 1÷24 bar and a flow rate comprised in the range 200÷600 l/min; the flow of gas has a pressure greater than 2 bar and a flow rate greater than 3000 1/min. Finally, the ratio between volume of gas and volume of liquid in the washing mixture is comprised between 1/5 and 1/10.

In particular, the regeneration method provides a real washing step, comprising intermittently supplying the particulate filter with the aforementioned gas-washing liquid mixture , according to pulses of a duration between 5 and 15 seconds. Such successive pulses, which together constitute the real washing step, are repeated for a number of times varying between 5 and 15.

European patent application EP 1060780 describes a method and a device for regenerating a particulate filter, the method comprising a real washing step, during which pulses of pressurised washing liquid, for example pressurised water, pass through the particulate filter followed by a drying step, during which pulses of pressurised gas, for example compressed air pass through the particulate filter.

International patent application WO 03/093659 describes a method and a device for regenerating a particulate filter wherein a flow of liquid and a flow of gas simultaneously pass through the filter body.

The gas-washing liquid mixture has a pressure comprised in the range 1÷24 bar and a flow rate comprised in the range 200÷600 l/min; the flow of gas has a pressure greater than 2 bar and a flow rate greater than 3000 l/min. Finally, the ratio between volume of gas and volume of liquid in the washing mixture is comprised between 1/5 and 1/10.

In particular, the regeneration method provides a real washing step, comprising intermittently supplying the particulate filter with the aforementioned gas-washing liquid mixture , according to pulses of a duration between 5 and 15 seconds, preceded by a step of wetting the filter by immersing it in a wetting solution consisting of an aqueous medium, in the absence of ultrasound vibrations.

The successive pulses, which together constitute the real washing step, are repeated for a number of times varying between 1 and 10, whereas the wetting step has a duration comprised between 1 and 6 hours.

The methods known in the art, although effective in terms of the regeneration of the filter, i.e. the removal of the particulate from the body of the filter, often require long time periods for a complete regeneration cycle to be carried out, generally equal to at least 30 minutes or more.

Another drawback of the solutions used up to now consists of the high energy consumption related to the need of feeding high flow rates of water and gas per unit time, at high pressures often greater than or equal to 2 bar, and of heating one or more furnaces. In particular, the use of furnaces for the initial heating step of the filters and the final drying step thereof requires high consumption of electrical energy.

A third drawback is related to the structural integrity of the filters subjected to regeneration. The pressure pulses transmitted to the filter body by the washing liquid, by the drying gas and/or by the gas-washing liquid mixture can cause the thin walls that separate the channels of the body of the filter to break or become damaged, with obvious negative repercussions on the operation and on the remaining useful life of the filter. This problem is particularly serious when the particulate filters are enclosed in metal cases equipped with inlet sections having a small diameter; the flow of the pressurised washing liquid, introduced into the casing of the filter through its outlet section, generally having a large diameter, does not find an easy way out through the narrow inlet section and consequently the pressure inside the filter body suddenly increases.

The object of the present invention is to provide a method and an apparatus for regenerating used particulate filters of vehicles, for example automobiles, lorries, trucks, etc., which overcome the drawbacks of known solutions in a simple and effective manner, allowing a substantially complete regeneration of the filters with minimal risks of damage.

A further object of the present invention is to provide a method and an apparatus for regenerating used particulate filters of vehicles, which allow to increase the effectiveness of regeneration of the filter, meanwhile ensuring substantially shorter washing times and minimum energy consumption.

Yet another object of the present invention is to provide an apparatus for regenerating used particulate filters of vehicles, which has a simple and compact structure and can be made with low costs.

A further object of the present invention is to provide a method and an apparatus for regenerating used particulate filters of vehicles, which also allow the catalytic devices possibly associated with the particulate filters to be at least partially cleaned.

In a first aspect thereof, the present invention therefore relates to a method according to claim 1.

In particular the present invention relates to a method for at least partially regenerating a particulate filter of a motor vehicle, as disclosed in claim 1.

Advantageously, the method according to the present invention provides washing the particulate filter to be regenerated with a washing liquid that passes through the body of the filter together with, i.e. at the same time as, a gas, and this is carried out for the entire duration of the washing step a).

The fluid that is produced, which is preferably bi-phase - i.e. the gas remains in the liquid in the form of bubbles and at most a minimal part of the gas goes into solution - passes through the channels of the body of the particulate filter continuously for the entire duration of the washing, carrying out a mechanical action removing the deposits of particulate which are present.

Basically, the gas works in synergy with the washing liquid, thus allowing an effective removal of the particulate from the inner walls of the channels of the filter body. The gas bubbles present in the washing liquid, in fact, contribute to maximise the effect of the mechanical particulate cleaning action.

At the same time, the gas bubbles present in the washing liquid also advantageously allow to dampen any momentary pressure peaks that can be generated in the channels of the filter body. The gas bubbles, in fact, being compressible, prevent the transmission of pressure pulses, or pressure surges, which are potentially harmful to the filter, whilst still carrying out the aforementioned advantageous mechanical removal action of the solid particles held by the filter.

Preferably, the method also comprises the additional steps of:
a0') feeding a flow of prewashing liquid to the outlet section of the particulate filter; and
a0") feeding a plurality of gas pulses to the outlet section of the particulate filter;
wherein steps a0') and a0") are carried out at least in part simultaneously before the washing step a).

Preferably, the flow of prewashing liquid has a flow rate comprised in the range 25÷35 litres per minute and a pressure comprised in the range 1+2 bar.

Preferably, each pulse of the plurality of gas pulses has a pressure comprised between 2÷6 bar, more preferably, equal to about 5 bar, and a duration comprised between 2÷6 seconds, more preferably, equal to about 4 seconds.

Preferably, there is provided a number of gas pulses varying between 10 and 20, more preferably equal to 15 pulses of gas.

Preferably, the flow of washing liquid has a flow rate comprised in the range 25÷35 litres per minute and a pressure, in absolute value, comprised in the range 1÷2 bar.

The gas flow has a flow rate comprised in the range 300÷400 m³/h and a pressure comprised in the range 1÷2 bar.

In both cases, the pressure value, expressed in terms of differential pressure with respect to atmospheric pressure, is instead equal to 0÷1 bar; in other words, the washing liquid is fed to the outlet section of the particulate filter at a pressure equal to atmospheric pressure or just greater, up to 1 bar greater.

Preferably, the washing liquid is water.

In this case, the respective flow preferably has a flow rate equal to about 30 litres per minute and a pressure equal to about 1.3 bar, i.e. 0.3 bar in terms of pressure differential with respect to atmospheric pressure.

Preferably the gas is air.

In this case, the respective flow preferably has a flow rate equal to about 330 m³/h and a pressure equal to about 1.3 bar, i.e. 0.3 bar in terms of pressure differential with respect to atmospheric pressure.

In an embodiment of the method according to the invention, a small amount of a detergent compound is mixed with the washing liquid and, if steps a0') a0") are provided, with the prewashing liquid.

Preferably, the detergent is of the degreaser type, for example a detergent for cleaning oily surfaces. The amount of detergent is preferably of the order of 10 grams for every 20 litres of washing and prewashing water.

In the preferred conditions described above the washing water and the compressed air form a bi-phase fluid that passes through the channels of the body of the particulate filter thereby removing the particulate built up therein.

Preferably, the compressed air is fed to the particulate filter at a temperature comprised in the range 70÷90°C. The high temperature of the air contributes to maximising the effectiveness of the regeneration, since the deposits of particulate trapped in the channels of the body of the filter tend to dissolve as the temperature increases.

Preferably, the washing water used for the regeneration of the particulate filters is recycled.

In this preferred embodiment, the method also comprises the steps of:
c) removing, for example by means of a device having interchangeable filters, the impurities or solid particles present in the slurry exiting from the particulate filter;
d) recirculating the washing liquid substantially free of solid particles to the particulate filter.

Preferably, the washing liquid is recirculated to the particulate filter through the first feeding line.

In this way, the disposal of the slurry, which would be treated as special waste, is advantageously avoided.

In the absence of the prewashing steps a0'), a0"), the washing step a) preferably has a duration T1 comprised between 20 and 30 minutes.

The Applicant has experimentally verified that 25 minutes of treatment are sufficient to regenerate most particulate filters used in modern automobiles and that for particulate filters of industrial vehicles 30 minutes normally suffice.

The Applicant has experimentally verified that in the presence of the prewashing steps a0'), a0"), the washing step a) preferably has a duration T1' comprised between 5 and 10 minutes and the prewashing steps a0'), a0") preferably have an overall duration T1" comprised between 30 seconds and 2 minutes.

In a preferred embodiment, the method further comprises a step e) of feeding a flow of drying gas to the particulate filter for a time period T2 comprised between 15 and 20 minutes, step e) being carried out after step b).

In the preferred embodiment that provides the use of compressed air at a high temperature, the latter provides of completing the drying of the filter in a few minutes.

Preferably, the air is supplied by a compressor or a blower.

Advantageously, the method according to the present invention allows a particulate filter to be regenerated by exploiting low-pressure flows of a washing liquid and of a gas and low flow rates of washing liquid.

Moreover, the use of furnaces is not required. The energy saving linked to the lower consumption of electricity is evident with respect to conventional solutions that provide high-pressure flows, large flow rates of the flows and furnaces.

In a second aspect thereof, the present invention relates to an apparatus, according to claim 12, for at least partially regenerating a particulate filter of a motor vehicle.

During a regeneration cycle of a particulate filter, the feeding lines of the washing liquid and of the gas are both simultaneously active to feed a substantially bi-phase flow of the two fluids through the channels of the filter body.

In a preferred embodiment, the control unit is also programmed to drive the simultaneous feeding of a prewashing liquid flow and of a plurality of gas pulses to the outlet section of the particulate filter being regenerated.

Preferably, the control unit is programmed to drive the feeding of a drying gas flow to the outlet section of the filter.

The apparatus further comprises a pump connected to the first feeding line, for supplying the washing liquid to the first feeding line, and a compressor, or a blower, connected to the second feeding line for supplying the gas to the second feeding line.

As described above with respect to the regeneration method, the washing liquid and the possible prewashing liquid are preferably water; the pump supplies the water into the first feeding line with a flow rate preferably comprised in the range 25÷35 litres per minute and a pressure comprised in the range 1÷2 bar (absolute pressure values).

As highlighted above, the gas is preferably air.

Preferably, the compressor supplies the air into the second feeding line at a pressure comprised in the range 1÷2 bar (absolute pressure values).

Preferably, the blower supplies the air into the second feeding line with a flow rate comprised in the range 300÷400 m³/h and a pressure comprised in the range 1÷2 bar (absolute pressure values).

More preferably, the compressor or the blower supplies the air into the second feeding line at a temperature comprised in the range 70÷90°C.

In a preferred embodiment, the apparatus comprises a support of the particulate filter and a collection tank of the washing liquid.

The support is structured to keep the particulate filter in vertical position, i.e. with the channels of the filter body in vertical position, with the outlet section facing upwards and the inlet section facing towards the collection tank.

The first feeding line and the second feeding line are connected to a coupling element capable of being coupled in a substantially fluid-tight manner to the outlet section of the particulate filter.

The water passing through the filter body, from the outlet section to the inlet section thereof (countercurrent with respect to the direction normally followed by the exhaust gases of the vehicle), is discharged downwards also by the effect of gravity.

Preferably, the coupling element comprises:
- a female portion, fixed to the support, and
- a male portion capable of being sealably engaged in the female portion and connected to the outlet section of the particulate filter, for example by means of a tubular duct.

Preferably, the tubular duct comprises a first portion with a substantially constant diameter, the first portion being associated to the outlet section of the filter, and a second portion associated to said male portion of the coupling element and provided with a constricted section.

Preferably, the apparatus further comprises a device for removing the solid particles from a slurry discharged through the inlet section of the particulate filter and collected in the collection tank.

Preferably, the first feeding line is at least partially supplied with the washing liquid recovered by the collection tank.

In this way, all of the water collected in the tank can be recycled and used in a closed circuit for feeding to the filter, collection, filtering of the impurities and feeding to the filter again.

According to a preferred embodiment, the device for removing the solid particles from the slurry is a filtering device having interchangeable filters comprising:
- a collection space of the filtered washing liquid,
- a filter made of non-woven fabric arranged above said collection space,
- means for unwinding and subsequently winding the filter made of non-woven fabric, and
- a level sensor, adapted to detect a clogged condition of the filter and to drive the operation of the means for unwinding and subsequently winding the filter made of non-woven fabric.

Advantageously, the level sensor drives the means for unwinding and subsequently winding the filter when the filter made of non-woven fabric lowers beyond a predetermined threshold value due to the weight of the particles held so as to quickly replace the clogged portion of the filter with a corresponding new filtering portion.

The operation of the apparatus preferably provides a single regeneration cycle for each particulate filter being treated.

A regeneration cycle in turn comprises, in a first preferred embodiment, the combined washing with water and air continuously for a time period T1.

After the regeneration cycle, the particulate filter is subjected to a drying cycle, carried out by only hot compressed air, for a time period T2. The control unit drives the operation of the feeding lines automatically; alternatively, the control unit can be bypassed manually by an operator.

In a second preferred embodiment, a regeneration cycle comprises the combined prewashing with water and pulses of air for a time period T1", followed by the combined washing with water and air continuously for a time period T1'.

Preferably, upstream of the prewashing or of the washing a step of impregnating the filter with a flow of just water can be provided.

Advantageously, the method and the apparatus according to the present invention can be used to jointly regenerate the particulate filters and the catalytic devices possibly associated therewith in such a way that they are not easy to separate, for example when the catalytic device is included in the same casing as the particulate filter.

Additional features and advantages of the present invention will become more readily apparent from the following detailed description of some preferred embodiments thereof, made with reference to the attached drawings. In such drawings:
- figure 1 is a front view of an apparatus according to a preferred embodiment of the present invention;
- figure 2 is a perspective view of the apparatus of figure 1;
- figure 3 is a front view of some elements of the apparatus shown in figures 1 and 2;
- figure 4 is an enlarged front view of some of the elements of the apparatus shown in figure 3;
- figures 5 and 6 are partial perspective views of some of the elements shown in figure 3; and

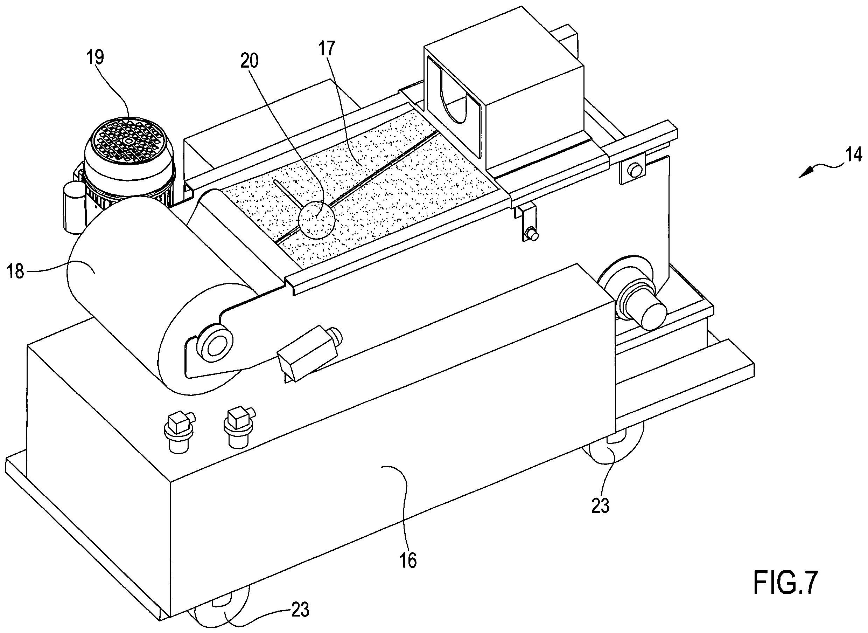

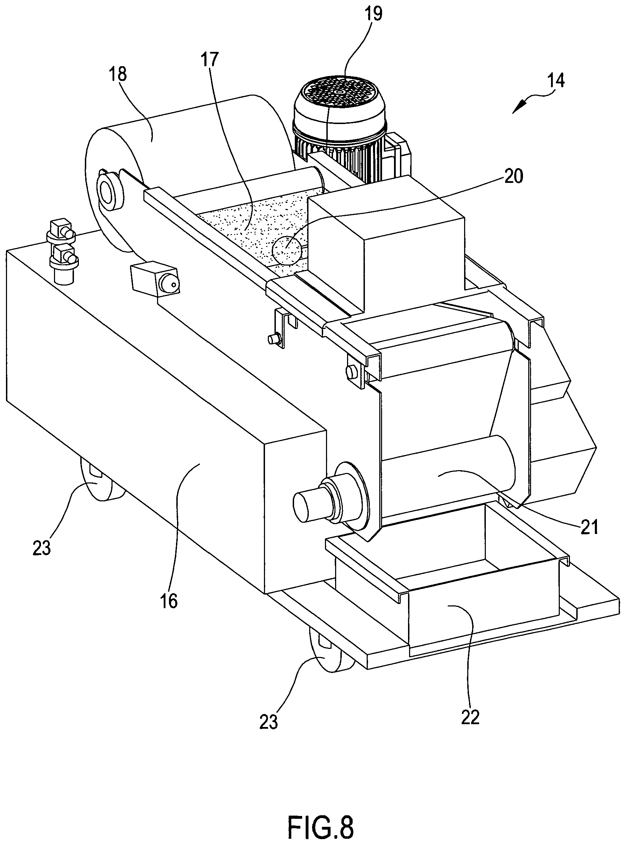

- figures 7 and 8 are perspective views of a filtering device of the apparatus shown in figures 1 and 2.

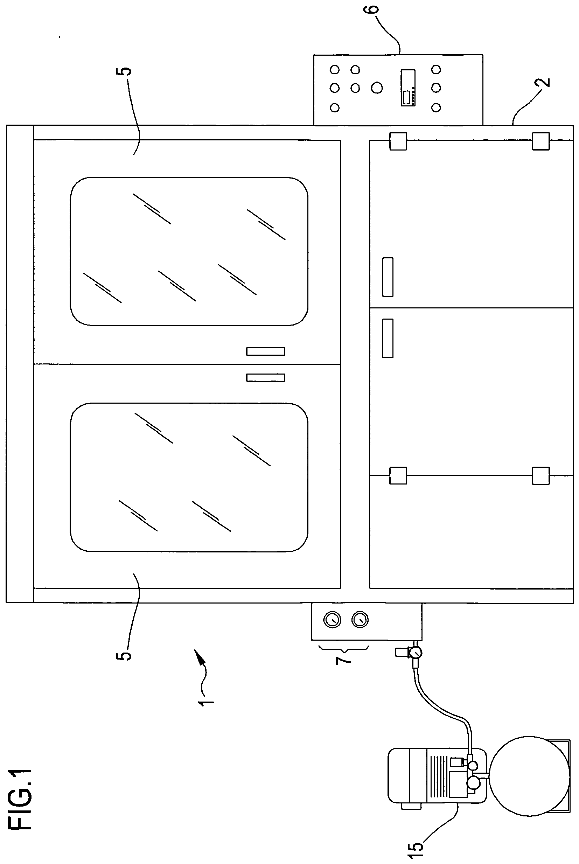

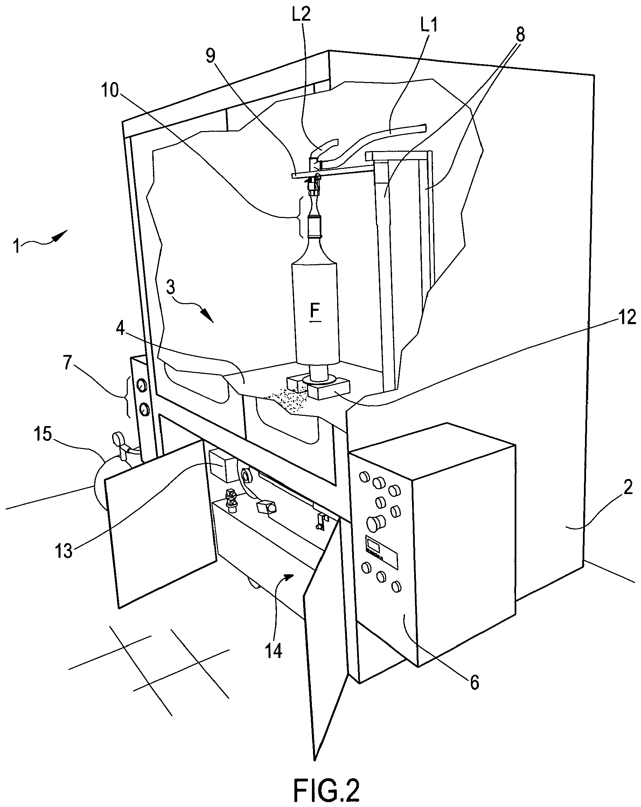

Figures 1 and 2 show an apparatus 1 according to a preferred embodiment of the present invention, intended for at least partially regenerating used particulate filters, of the type normally installed on diesel oil-driven vehicles, such as automobiles or industrial vehicles.

The apparatus 1 is substantially arranged in a housing 2, in the sense that most of its components are housed there. In particular, a space 3 is formed in the housing 2 for receiving the particulate filters F to be regenerated.

The lower portion of the housing 3 consists of a tank 4 for collecting the washing liquid used for the treatment of the filter F; the space 3 is delimited at the top by a pair of openable doors 5, preferably transparent, the function of which is to protect the operator from sprays during the operation of the apparatus 1 and to avoid accidental leakage of the washing liquid from the space 3.

The apparatus 1 further comprises a control unit 6, shown provided with a control pushbutton panel for the operator, and preferably with one or more indicators 7 of the flow rate and/or pressure of the washing liquid and of the gas used for the regeneration.

With particular reference to figure 2, the apparatus 1 further comprises a support structure 8 of the filter F. The structure 8, for example in the form of a metal tube trestle, is provided with a horizontal arm 9 to which the filter F can be fixedly connected in vertical position, i.e. with the longitudinal axis of the channels inside the filter body oriented vertically.

Preferably, the support structure 8 is height-adjustable, for example it is telescopic, to allow the effective support of filters F having different lengths, as normally occurs with filters F made by different manufacturers.

Preferably, the apparatus 1 comprises a junction 10 for connecting the filter F and the arm 9 of the support structure 8. The coupling element 10 comprises a female portion 101, stably fixed to the arm 9, and a male portion 102 removably fluid-tight associated to the bracket of the filter F placed at the outlet section FO thereof.

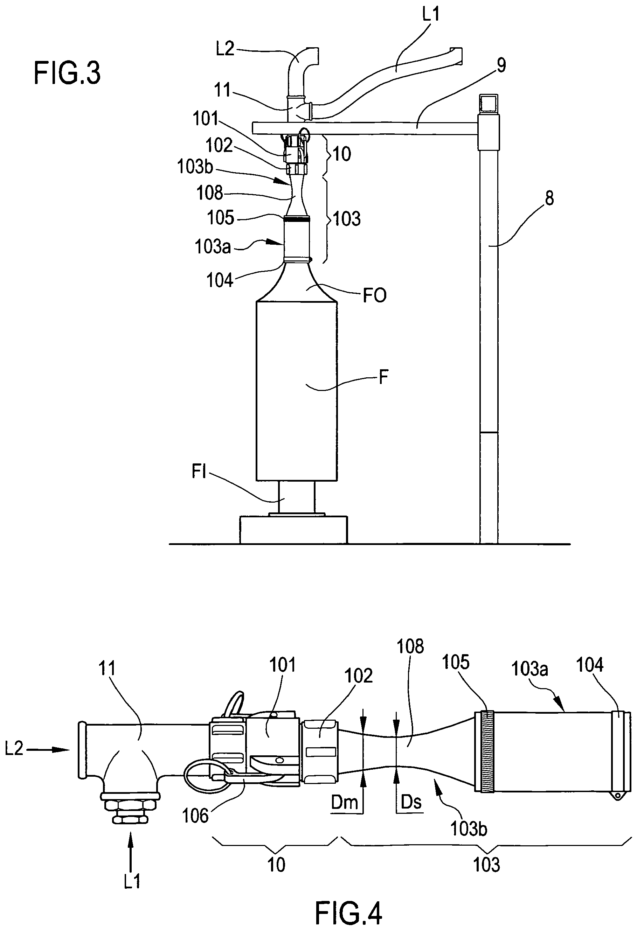

Figures 3-6 respectively show front views of the coupling element 10 in a use configuration and perspective views of the female portion 101 and of the male portion 102 of the coupling element 10.

The filter F, previously dismounted from the respective vehicle, for example an automobile, a lorry or a truck, is coupled with the male portion 102 of the coupling element 10 by means of a tubular duct 103 comprising a first portion 103a with a substantially constant diameter, associated with the outlet portion FO of the filter F, and a second portion 103b associated with the male portion 102 of the coupling element 10 and having a narrow section or constricted section 108.

In the preferred embodiment illustrated, the portions 103a, 103b of the tubular duct 103 are structurally independent, the first portion 103a of the tubular duct 103 being associated, at one end, with the outlet portion FO of the filter F by means of a hose clamp 104 suitable for ensuring the seal on the filter F and, at the opposite end, with the second portion 103b by means of a collar 105.

Preferably, the first portion 103a of the tubular duct 103 is made of rubber and has sufficient elasticity to allow it to adapt to different diameters of the outlet portion FO of the filter F.

In an alternative preferred embodiment, portions 103a, 103b of the tubular duct 103 are made in one piece, preferably from a sufficiently rigid elastic material, in which case the tubular duct 103 does not have the collar 105.

The constricted section 108 provided in the second portion 103b generates a heating of the flow of gas fed to the filter F through the tubular duct 103.

As a result, advantageously, the apparatus according to the invention does not need furnaces or burners to heat the gas, which in addition to complicate the structure of the apparatus also increase production costs thereof.

Preferably, the ratio between the diameter Dₘ and the diameter Dₛ of the portion 103b of the tubular duct 103, respectively upstream of and at the constricted section 108, is comprised between 1.1 and 1.5 and, more preferably, it is equal to about 1.3.

In a preferred embodiment, the diameter Dₘ upstream of the constricted section 108 is comprised between 3 and 5 cm and, more preferably, it is equal to about 4 cm, whereas the diameter D₅ at the constricted section 108 is comprised between 2 and 4 cm and, more preferably, it is equal to about 3 cm.

The male portion 102 of the coupling element 10, for example made of metal or rigid plastic - a suitable material is for example the block copolymer ABS - is inserted into the female portion 101, which is provided with two shaped levers 106 that, when rotated by the user, engage the throat 107 of the male portion 102, thus preventing it from accidentally disengaging and ensuring the water-tight of the coupling.

A support base 12 (figure 2), equipped with a suitable slot to facilitate the washing liquid to flow, can be positioned above the collection tank 4 to block the filter F during regeneration, thus preventing any movements caused by vibrations.

With reference again to figure 2, the apparatus 1 further comprises a pump 13 for supplying the washing liquid to the feeding line L1.

Preferably, the pump 13 is arranged at the bottom of the collection tank 4 to allow the collected liquid to be recirculated.

The apparatus further comprises a compressor, or blower 15, preferably arranged at the side of the apparatus 1, more preferably inside the apparatus 1, under the collection tank 4, the compressor or blower 15 being suitable for supplying compressed air to the feeding line L2.

Preferably, the apparatus comprises a device 14 for filtering the washing liquid, preferably arranged under the collection tank 4 and having the function of intercepting the particulate and the particles of dirt removed from the filter F.

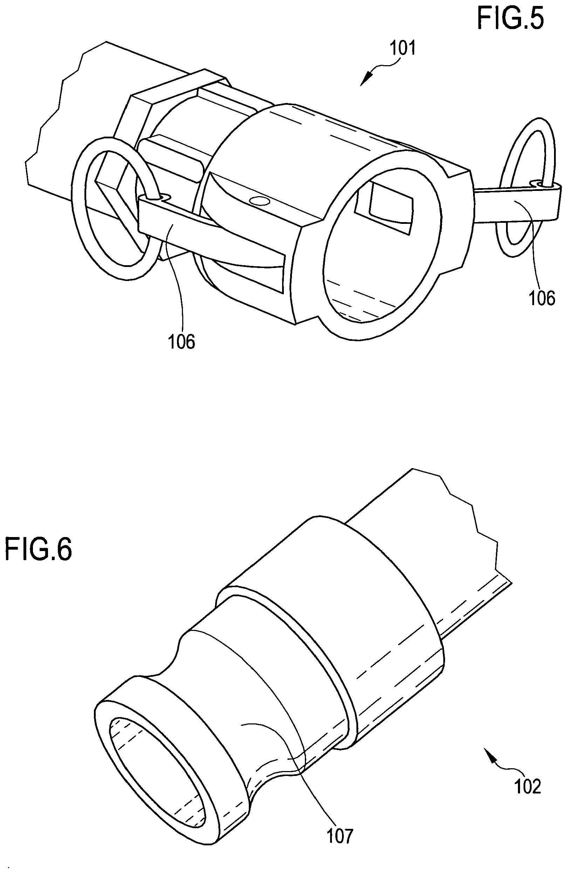

With reference to figures 5 and 6, a filtering device 14 according to a preferred embodiment is illustrated, but it should be understood that any other known filtering device suitable for the purpose can be used.

The device 14 comprises a respective collection tank 16 of the filtered washing water above which a portion of a filter made of non-woven fabric 17 and unwound from a respective roll 18 driven by a motor 19 is arranged..

In use, the portion of filter made of non-woven fabric is located under the collection tank 4 of the regeneration apparatus 1.

The slurry, comprising the washing liquid and the solid particles, for example particles of dirt and particulate removed from the regenerated particulate filter F, is fed through a duct (not shown) from the collection tank 4 onto the portion of filter made of non-woven fabric 17 which is positioned above the collection tank 16 of the filtering device 14 and is then filtered.

After such a filtering operation, the solid particles deposit on the filter made of non-woven fabric 17, while the washing water thus purified collects in the collection tank 16 of the filtering device 14 and is then ready to be recirculated in the apparatus 1 by the action of the pump 13.

The filtering device 14 further comprises a level sensor 20, in the example illustrated a float 20, which when the filter 17 is completely clogged by the solid particles, drives the motor 19 for unwinding the roll 18, which causes the filter 17 to move forwards, thus replacing its clogged portion with a new portion.

The filter of non-woven fabric 17 on which the solid particles have accumulated is, in turn, wound on a roll 21 and the solid particles are collected in a respective tray 22.

Preferably, the filtering device 14 is provided with wheels 23, which facilitate the displacement of the filtering device 14, for example to extract it from the apparatus 1 if it is necessary to replace the roll 21 with a new roll 18.

A preferred embodiment of a regeneration method according to the invention carried out by means of the apparatus 1 described above will now be described.

Once the particulate filter F has been correctly positioned in the space 3, as described above, with the male portion 102 of the coupling element 10 inserted and tightened in the female portion 101, the operator closes the doors 5 and drives the switching on by means of the control unit 6.

The control unit 6 operates the pump 13 and the compressor or the blower 15 to simultaneously supply the lines L1 and L2 and in this way simultaneously direct a substantially bi-phase flow of the washing liquid, preferably water, and a gas flow, preferably air, to the coupling element 11, having a generic Y or T shape, and from this to the coupling element 10.

Such a step is indicated as washing step of the particulate filter F.

The substantially bi-phase flow of water and air (the air does not enter into solution but mostly remains confined in bubbles in the water), passes through the filter F, i.e. it flows in parallel channels that form the body of the filter F, thus removing the particulate that has accumulated.

The control unit 6 is programmed to continuously supply the lines L1 and L2 for a time period T1 comprised between 20 and 30 minutes. During this time period, which constitutes a washing cycle, the water and the air simultaneously and continuously pass through the filter F.

Preferably, the washing liquid/particulate slurry coming out from the inlet section FI of the filter F is collected in the tank 4 and fed to the filtering device 14 to be recirculated to the apparatus 1. The device 14 intercepts the particles of particulate material present in the washing liquid, which is made available for feeding to the line L1 by the pump 13. When the filter 17 of the device 14 is exhausted, it is sufficient to replace it with a new element.

The compressor 15 supplies the line L2 with compressed air at a temperature comprised in the range 70÷90°C, a flow rate comprised between 300÷400 m³/h, and preferably equal to about 330 m³/h, and a pressure comprised in the range 1÷2 bar, preferably equal to 1.3 bar.

Preferably, the pump 13 supplies the line L1 with water having a flow rate comprised in the range 25÷35 litres per minute, more preferably equal to about 30 litres per minute, and a pressure comprised in the range 1÷2 bar, more preferably equal to about 1.3 bar.

Preferably, the apparatus 1 comprises a tank (not shown) for a detergent fluid. The detergent, for example of the degreaser type, is mixed with the water in a minimal quantity to optimise the particulate removal action.

Preferably, upstream of the washing step, the regeneration method of the invention provides a so-called prewashing step.

In a preferred embodiment, this prewashing step can be carried out as follows.

In such a prewashing step, the control unit 6 operates the pump 13 and the compressor 15 to simultaneously feed the lines L1 and L2 and in this way to direct a flow of the washing liquid, preferably water, and a plurality of pulses of gas, preferably air, to the coupling element 11.

Preferably, the compressor 15 supplies the line L2 with a plurality of pulses of compressed air in a variable number of between 10 and 20, more preferably 15 pulses, having a pressure comprised in the range 2÷6 bar, preferably equal to 5 bar and a duration comprised between 2 and 6 seconds, preferably 4 seconds.

Preferably, the pump 13 supplies the line L1 with water having a flow rate of prewashing water comprised in the range 25÷35 litres per minute, more preferably equal to about 30 litres per minute, and a pressure comprised in the range 1÷2 bar, more preferably equal to about 1.3 bar.

If the prewashing step is provided, the control unit 6 is programmed to supply the lines L1 and L2 for a prewashing time period T1" comprised between 30 seconds and 2 minutes, more preferably 1 minute and for a washing time period T1' comprised between 5 and 10 minutes. Advantageously, the presence of the prewashing step substantially reduces the regeneration time of the particulate filter F.

Preferably, upstream of the prewashing step or, if such a step is not present, upstream of the washing step, the method of the invention provides a further step of impregnating the filter with washing liquid, preferably for a time period of 1 minute.

In such an impregnation step, the control unit 6 operates the pump 13 to supply the line L1 and in this way to direct a flow of washing liquid, preferably water, to the coupling element 11. Preferably, the pump 13 supplies the line L1 with water having a flow rate of impregnation water comprised in the range 25÷35 litres per minute, more preferably equal to about 30 litres per minute, and a pressure comprised in the range 1÷2 bar, more preferably equal to about 1.3 bar.

Preferably, at the end of the regeneration cycle the control unit 6 drives the interruption of the operation of the pump 13; the filter F is then fed with only compressed air, preferably hot compressed air, to obtain a complete drying thereof.

The time period T2 during which the filter F is subjected to drying is comprised between 15 and 20 minutes.

Preferably, the heating of the air takes place thanks to the presence, in the tubular duct 103 for feeding the particulate filter F, of the constricted section 108.

It is thus advantageously possible to avoid the presence in the regeneration apparatus 1 of furnaces or similar means for heating the gas, which in addition to being expensive, increase the structural complexity of the apparatus itself.

Once the time period T2 has lapsed, the filter F is regenerated and can be removed from the space 3 to allow the positioning of another filter to be regenerated.

The apparatus 1 makes it possible to substantially completely regenerate used particulate filters, taking again the relative performance to values close or equal to those that characterise new filters, without the risk of breaking, without the use of furnaces and with minimal energy consumption.

## Claims

1. Method for at least partially regenerating a particulate filter (F) of a motor vehicle, the particulate filter (F) being provided with inlet and outlet sections of the exhaust gases of the vehicle, comprising the steps of:
a) simultaneously feeding a flow of a washing liquid and a gas flow to the outlet section (FO) of the particulate filter (F) so that the particulate filter (F) is simultaneously passed through by the washing liquid and the gas, and
b) discharging a slurry including said washing liquid and solid particles removed from the particulate filter (F) through the inlet section (FI) of the particulate filter (F),
wherein said simultaneous flows of the washing liquid and of the gas are continuously fed to said particulate filter (F) for the entire duration of said washing step a);
**characterized in that** said gas flow has a flow rate comprised in the range 300÷400 m³/h and a pressure comprised in the range 1÷2 bar.

2. Method according to claim 1, comprising, the additional steps of:
a0') feeding a flow of prewashing liquid to the outlet section (FO) of the particulate filter (F); and
a0") feeding a plurality of gas pulses to the outlet section (FO) of the particulate filter (F),
wherein said steps a0') and a0") are carried out at least in part simultaneously before said washing step a).

3. Method according to claim 2, wherein said flow of prewashing liquid has a flow rate comprised in the range 25÷35 litres per minute and a pressure comprised in the range 1÷2 bar.

4. Method according to claim 2 or 3, wherein each pulse of said plurality of gas pulses has a pressure comprised in the range 2÷6 bar and a duration comprised in the range 2÷6 seconds.

5. Method according to any one of claims 1-4, wherein said flow of washing liquid has a flow rate comprised in the range 25÷35 litres per minute and a pressure comprised in the range 1÷2 bar.

6. Method according to claim 1 or 2, wherein the washing liquid and/or the prewashing liquid comprise at least one detergent compound.

7. Method according to any one of claims 1-6, wherein the temperature of said gas is comprised in the range 70÷90°C.

8. Method according to any one of claims 1-7, further comprising the steps of:
c) removing the solid particles from the slurry; and
d) recirculating the washing liquid substantially free of solid particles to the particulate filter (F).

9. Method according to claim 1, wherein said washing step a) has a duration T1 comprised between 20 and 30 minutes.

10. Method according to any one of claims 2-4, wherein said washing step a) has a duration T1' comprised between 5 and 10 minutes and said prewashing steps a0'), a0") have an overall duration T1" comprised between 30 seconds and 2 minutes.

11. Method according to any one of claims 1-10, further comprising a step of:
e) feeding a flow of drying gas to the particulate filter (F) for a time period T2 comprised between 15 and 20 minutes;
said step e) being carried out after said step b).

12. Apparatus (1) for at least partially regenerating a particulate filter (F) of a motor vehicle, comprising:
- at least a first feeding line (L1) of a flow of washing liquid to the outlet section of said particulate filter (F);
- at least a second feeding line (L2) of an air flow to the outlet section of said particulate filter (F); and
- a control unit (6) of the first and second feeding line (L1, L2), said control unit (6) being programmed to drive the simultaneous feeding of the washing liquid and air flows to the outlet section (FO) of the particulate filter (F) being regenerated; and
a pump (13) for supplying the washing liquid to the first feeding line (L1);
wherein said control unit (6) is also programmed to drive the feeding of the simultaneous washing liquid and air flows to the particulate filter in a continuous manner for the entire duration of the washing step;
**characterized in that** it further comprises a compressor, or a blower, (15) for supplying the air to the second feeding line (L2), said control unit (6) being also programmed to operate said compressor, or blower, (15) for supplying the air into the second feeding line (L2) with a flow rate comprised in the range 300÷400 m³/h and a pressure comprised in the range 1÷2 bar.

13. Apparatus (1) according to claim 12, wherein said control unit (6) is programmed to drive the simultaneous feeding of a prewashing liquid flow and of a plurality of gas pulses to the outlet section (FO) of the particulate filter (F) being regenerated.

14. Apparatus (1) according to claim 12 or 13, wherein said control unit (6) is programmed to drive the feeding of a drying gas flow to the outlet section (FO) of the particulate filter (F).

15. Apparatus (1) according to any one of claims 12-14, further comprising a support (8) of the particulate filter (F) and a collection tank (4) of the washing liquid,
wherein the support (8) is structured to keep the particulate filter (F) in vertical position, with the outlet section (FO) facing upwards and the inlet section (FI) facing towards the collection tank (4), and
wherein said first feeding line (L1) and said second feeding line (L2) are connected to a coupling element (10) capable of being coupled in a substantially fluid-tight manner to the outlet section (FO) of the particulate filter (F).

16. Apparatus (1) according to claim 15, wherein said coupling element (10) comprises:
- a female portion (101) fixed to said support (8), and
- a male portion (102) capable of being sealably engaged in the female portion (101) and connected to the outlet section (FO) of the particulate filter (F) by means of a tubular duct (103).

17. Apparatus (1) according to claim 16, wherein said tubular duct (103) comprises a first portion with a substantially constant diameter, said first portion being associated to the outlet section (FO) of the filter (F), and a second portion (103b) associated to said male portion (102) of said coupling element (10) and provided with a constricted section (108).

18. Apparatus (1) according to claim 15, further comprising a device (14) for removing solid particles from a slurry discharged through the inlet section (FI) of the particulate filter (F) and collected in the collection tank (4).

19. Apparatus (1) according to claim 18, wherein said device (14) for removing the solid particles is a filtering device with interchangeable filters comprising:
- a collection space (16) of the filtered washing liquid,
- a filter made of non-woven fabric (17) arranged above said collection space (16),
- means (18, 19, 21) for unwinding and subsequently winding the filter made of non-woven fabric (17), and
- a level sensor (20), adapted to detect a clogged condition of the filter (17) and to drive the operation of the means (18, 19, 21) for unwinding and subsequently winding the filter made of non-woven fabric (17).

## Patentansprüche

1. Verfahren zum zumindest teilweisen Regenerieren eines Partikelfilters (F) eines Kraftfahrzeugs, wobei der Partikelfilter (F) mit Einlass- und Auslassabschnitten für die Abgase des Fahrzeugs versehen ist, umfassend die Schritte:
a) gleichzeitigen Zuführen eines Waschflüssigkeitsstroms und eines Gasstroms zum Auslassabschnitt (FO) des Partikelfilters (F), so dass der Partikelfilter (F) gleichzeitig von der Waschflüssigkeit und dem Gas durchströmt wird, und
b) Abführen einer die aus dem Partikelfilter (F) entfernte Waschflüssigkeit und Feststoffpartikel enthaltenden Aufschlämmung durch den Einlassabschnitt (FI) des Partikelfilters (F),
wobei die gleichzeitigen Strömungen der Waschflüssigkeit und des Gases dem Partikelfilter (F) für die gesamte Dauer des Waschschrittes a) kontinuierlich zugeführt werden;
**dadurch gekennzeichnet, dass** der Gasstrom eine Durchflussrate im Bereich von 300-400 m³/h und einen Druck im Bereich von 1-2 bar aufweist.

2. Verfahren nach Anspruch 1, umfassend die weiteren Schritte:
a0') Zuführen eines Vorwaschflüssigkeitsstroms zum Auslassabschnitt (FO) des Partikelfilters (F); und
a0") Zuführen einer Mehrzahl von Gasimpulsen zu dem Auslassabschnitt (FO) des Partikelfilters (F),
wobei die Schritte a0') und a0") zumindest teilweise gleichzeitig vor dem Waschschritt a) durchgeführt werden.

3. Verfahren nach Anspruch 2, wobei der Vorwaschflüssigkeitsstrom eine Durchflussrate im Bereich von 25-35 Liter pro Minute und einen Druck im Bereich von 1-2 bar aufweist.

4. Verfahren nach Anspruch 2 oder 3, wobei jeder Impuls der mehreren Gasimpulse einen Druck im Bereich von 2-6 bar und eine Dauer im Bereich von 2-6 Sekunden aufweist.

5. Verfahren nach einem der Ansprüche 1 bis 4, **dadurch gekennzeichnet, dass** der Waschflüssigkeitsstrom eine Durchflussrate im Bereich von 25-35 Liter pro Minute und einen Druck im Bereich von 1-2 bar aufweist.

6. Verfahren nach Anspruch 1 oder 2, wobei die Waschflüssigkeit und/oder die Vorwaschflüssigkeit wenigstens eine Waschmittelverbindung umfassen.

7. Verfahren nach einem der Ansprüche 1 bis 6, wobei die Temperatur des Gases im Bereich von 70-90°C liegt.

8. Verfahren nach einem der Ansprüche 1-7, ferner umfassend die Schritte:
c) Entfernen der Feststoffpartikel aus der Aufschlämmung; und
d) Rückführung der Waschflüssigkeit im Wesentlichen frei von Feststoffpartikeln zu dem Partikelfilter (F).

9. Verfahren nach Anspruch 1, wobei der Waschschritt a) eine Dauer T1 zwischen 20 und 30 Minuten aufweist.

10. Verfahren nach einem der Ansprüche 2 bis 4, wobei der Waschschritt a) eine Dauer T1' zwischen 5 und 10 Minuten aufweist und die Vorwaschschritte a0'), a0") eine Gesamtdauer T1" zwischen 30 Sekunden und 2 Minuten aufweisen.

11. Verfahren nach einem der Ansprüche 1-10, das ferner einen Schritt umfasst:
e) Zuführen eines Trocknungsgasstroms zu dem Partikelfilter (F) für eine Zeitdauer T2, die zwischen 15 und 20 Minuten liegt;
Wobei der Schritt e) nach dem Schritt b) durchgeführt wird.

12. Vorrichtung (1) zum zumindest teilweisen Regenerieren eines Partikelfilters (F) eines Kraftfahrzeugs, umfassend:
- zumindest eine erste Zuführleitung (L1) eines Waschflüssigkeitsstroms zu dem Auslassabschnitt des Partikelfilters (F);
- zumindest eine zweite Zuführleitung (L2) eines Luftstroms zu dem Auslassabschnitt des Partikelfilters (F); und
- eine Steuereinheit (6) der ersten und zweiten Zuführleitung (L1, I2), wobei die Steuereinheit (6) dazu programmiert ist, die gleichzeitige Zuführung der Waschflüssigkeit und Luft zum Auslassabschnitt (FO) des zu regenerierenden Partikelfilters (F) anzusteuern; und
eine Pumpe (13) zum Zuführen der Waschflüssigkeit zu der ersten Zuführleitung (L1); wobei die Steuereinheit (6) ferner dazu programmiert ist, die gleichzeitige Zuführung der Waschflüssigkeit und Luft für die gesamte Dauer des Waschschrittes kontinuierlich zum Partikelfilter anzusteuern;
**dadurch gekennzeichnet, dass** die Vorrichtung ferner einen Kompressor oder ein Gebläse (15) zum Zuführen der Luft zu der zweiten Zuführleitung (L2) umfasst, wobei die Steuereinheit (6) ferner dazu programmiert ist, den Kompressor oder das Gebläse (15) zum Zuführen der Luft in die zweite Zuführleitung (L2) mit einer Durchflussrate im Bereich von 300-400 m³/h und einem Druck im Bereich von 1-2 bar zu betreiben.

13. Vorrichtung (1) nach Anspruch 12, wobei die Steuereinheit (6) dazu programmiert ist, die gleichzeitige Zuführung eines Vorwaschflüssigkeitsstroms und mehrerer Gasimpulse zum Auslassabschnitt (FO) des zu regenerierenden Partikelfilters (F) anzusteuern.

14. Vorrichtung (1) nach Anspruch 12 oder 13, wobei die Steuereinheit (6) dazu programmiert ist, die Zuführung eines Trocknungsgasstroms zu dem Auslassabschnitt (FO) des Partikelfilters (F) anzusteuern.

15. Vorrichtung (1) nach einem der Ansprüche 12 bis 14, ferner umfassend einen Träger (8) des Partikelfilters (F) und einen Sammeltank (4) der Waschflüssigkeit,
wobei der Träger (8) strukturiert ist, um den Partikelfilter (F) in vertikaler Position zu halten, wonach der Auslassabschnitt (FO) nach oben weist und der Einlassabschnitt (FI) dem Sammeltank (4) zugewandt ist, und
wobei die erste Zuführleitung (L1) und die zweite Zuführleitung (L2) mit einem Kopplungselement (10) verbunden sind, das mit dem Auslassabschnitt (FO) des Partikelfilters (F) im Wesentlichen fluiddicht koppelbar ist.

16. Vorrichtung (1) nach Anspruch 15, wobei das Kopplungselement (10) umfasst:
- ein weiblicher Abschnitt (101), der an dem Träger (8) befestigt ist, und
- ein männlicher Abschnitt (102), der in dem weiblichen Abschnitt (101) abdichtbar in Eingriff bringbar ist und mit dem Auslassabschnitt (FO) des Partikelfilters (F) mittels eines rohrförmigen Kanals (103) verbunden ist.

17. Vorrichtung (1) nach Anspruch 16, wobei der rohrförmige Kanal (103) einen ersten Abschnitt mit einem im Wesentlichen konstanten Durchmesser umfasst, wobei der erste Abschnitt dem Auslassabschnitt (FO) des Filters (F) zugeordnet ist, und einen zweiten Abschnitt (103b), der dem männlichen Abschnitt (102) des Kopplungselements (10) zugeordnet ist und mit einem verengten Abschnitt (108) versehen ist.

18. Vorrichtung (1) nach Anspruch 15, ferner umfassend eine Vorrichtung (14) zum Entfernen von Feststoffpartikeln aus einer durch den Einlassabschnitt (FI) des Partikelfilters (F) abgeführten und in dem Sammeltank (4) gesammelten Aufschlämmung.

19. Vorrichtung (1) nach Anspruch 18, wobei die Vorrichtung (14) zum Entfernen der Feststoffpartikel eine Filtervorrichtung mit austauschbaren Filtern ist, umfassend:
- einen Sammelraum (16) der gefilterten Waschflüssigkeit,
- ein oberhalb des Sammelraums (16) angeordnetes Filter aus Vliesstoff (17),
- Mittel (18, 19, 21) zum Abwickeln und anschließenden Aufwickeln des Filters aus Vliesstoff (17), und
- einen Füllstandssensor (20), der dazu eingerichtet ist, einen verstopften Zustand des Filters (17) zu erfassen und den Betrieb der Mittel (18, 19, 21) zum Abwickeln und anschließenden Aufwickeln des Filters aus Vliesstoff (17) anzusteuern.

## Revendications

1. Procédé pour régénérer au moins partiellement un filtre à particules (F) d'un véhicule à moteur, le filtre à particules (F) étant muni de sections d'entrée et de sortie des gaz d'échappement du véhicule, comprenant les étapes de:
a) alimenter simultanément un flux de liquide de lavage et un flux de gaz vers la section de sortie (FO) du filtre à particules (F) de sorte que le filtre à particules (F) soit traversé simultanément par le liquide de lavage et par le gaz, et
b) décharger une boue comprenant ledit liquide de lavage et les particules solides enlevées du filtre à particules (F) par la section d'entrée (FI) du filtre à particules (F),
dans lequel lesdits flux simultanés du liquide de lavage et du gaz sont alimentés en continu vers ledit filtre à particules (F) pendant toute la durée de ladite étape de lavage a);
**caractérisé en ce que** ledit flux de gaz a un débit compris dans la gamme 300÷400 m³/h et une pression comprise dans la gamme 1÷2 bars.

2. Procédé selon la revendication 1, comprenant les étapes supplémentaires de:
a0') alimenter la section de sortie (FO) du filtre à particules (F) avec un flux de liquide de prélavage; et
a0") alimenter la section de sortie (FO) du filtre à particules (F) avec une pluralité d'impulsions de gaz,
dans lequel lesdites étapes a0') et a0") sont effectuées au moins en partie simultanément avant ladite étape de lavage a).

3. Procédé selon la revendication 2, dans lequel ledit flux de liquide de prélavage a un débit compris dans la gamme 25-35 litres par minute et une pression comprise dans la gamme 1-2 bars.

4. Procédé selon la revendication 2 ou 3, dans lequel chaque impulsion de ladite pluralité d'impulsions de gaz a une pression comprise dans la gamme 2-6 bars et une durée comprise dans la gamme 2-6 secondes.

5. Procédé selon l'une quelconque des revendications 1-4, dans lequel ledit flux de liquide de lavage a un débit compris dans la gamme 25-35 litres par minute et une pression comprise dans la gamme 1-2 bars.

6. Procédé selon la revendication 1 ou 2, dans lequel le liquide de lavage et/ou le liquide de prélavage comprennent au moins un composé détergent.

7. Procédé l'une quelconque des revendications 1-6, dans laquelle la température dudit gaz est comprise dans la gamme 70-90°C.

8. Procédé selon l'une quelconque des revendications 1-7, comprenant en outre les étapes de:
c) enlever les particules solides de la boue; et
d) faire circuler à nouveau le liquide de lavage, pratiquement exempt de particules solides, vers le filtre à particules (F).

9. Procédé selon la revendication 1, dans lequel ladite étape de lavage a) a une durée T1 comprise entre 20 et 30 minutes.

10. Procédé selon l'une quelconque des revendications 2-4, dans lequel ladite étape de lavage a) a une durée T1' comprise entre 5 et 10 minutes et lesdites étapes de prélavage a0'), a0") ont une durée globale T1" comprise entre 30 secondes et 2 minutes.

11. Procédé selon l'une quelconque des revendications 1-10, comprenant en outre une étape de:
e) alimenter le filtre à particules (F) avec un flux de gaz séchant pendant une période T2 comprise entre 15 et 20 minutes;
ladite étape e) étant effectuée après ladite étape b).

12. Appareil (1) pour régénérer au moins partiellement un filtre à particules (F) d'un véhicule à moteur, comprenant:
- au moins une première ligne d'alimentation (L1) d'un flux de liquide de lavage vers la section de sortie dudit filtre à particules (F);
- au moins une deuxième ligne d'alimentation (L2) d'un flux d'air vers la section de sortie dudit filtre à particules (F); et
- une unité de commande (6) de la première et de la deuxième ligne d'alimentation (L1, L2), ladite unité de commande (6) étant programmée pour commander l'alimentation simultanée des flux de liquide de lavage et d'air vers la section de sortie (FO) du filtre à particules (F) en cours de régénération; et
une pompe (13) pour alimenter la première ligne d'alimentation (L1) avec le liquide de lavage; dans lequel ladite unité de commande (6) est également programmée pour commander l'alimentation des flux simultanés du liquide de lavage et d'air vers le filtre à particules de manière continue pendant toute la durée de l'étape de lavage;
**caractérisé en ce qu'**il comprend en outre un compresseur, ou une soufflante, (15) pour fournir l'air à la deuxième conduite d'alimentation (L2), ladite unité de commande (6) étant également programmée pour faire fonctionner ledit compresseur, ou soufflante, (15) pour fournir l'air dans la deuxième ligne d'alimentation (L2) avec un débit compris dans la gamme 300-400 m³/h et une pression comprise dans la gamme 1-2 bars.

13. Appareil (1) selon la revendication 12, dans lequel ladite unité de commande (6) est programmée pour commander l'alimentation simultanée d'un flux de liquide de prélavage et d'une pluralité d'impulsions de gaz vers la section de sortie (FO) du filtre à particules (F) en cours de régénération.

14. Appareil (1) selon la revendication 12 ou 13, dans lequel ladite unité de commande (6) est programmée pour commander l'alimentation d'un flux de gaz de séchage vers la section de sortie (FO) du filtre à particules (F).

15. Appareil (1) selon l'une quelconque des revendications 12-14, comprenant en outre un support (8) du filtre à particules (F) et un réservoir de collecte (4) du liquide de lavage,
dans lequel le support (8) est structuré de manière à maintenir le filtre à particules (F) en position verticale, la section de sortie (FO) étant tournée vers le haut et la section d'entrée (FI) étant tournée vers le réservoir de collecte (4), et
dans lequel ladite première ligne d'alimentation (L1) et ladite deuxième ligne d'alimentation (L2) sont reliées à un élément de couplage (10) pouvant être couplé de manière sensiblement étanche aux fluides à la section de sortie (FO) du filtre à particules (F).

16. Appareil (1) selon la revendication 15, dans lequel ledit élément de couplage (10) comprend:
- une partie femelle (101) fixée audit support (8), et
- une partie mâle (102) pouvant être engagée de manière étanche dans la partie femelle (101) et reliée à la section de sortie (FO) du filtre à particules (F) au moyen d'un conduit tubulaire (103).

17. Appareil (1) selon la revendication 16, dans lequel ledit conduit tubulaire (103) comprend une première partie avec un diamètre sensiblement constant, ladite première partie étant combinée avec la section de sortie (FO) du filtre (F), et une seconde partie (103b) combinée avec ladite partie mâle (102) dudit élément de couplage (10) et pourvue d'une section étranglée (108).

18. Appareil (1) selon la revendication 15, comprenant en outre un dispositif (14) pour éliminer les particules solides d'une boue déchargée par la section d'entrée (FI) du filtre à particules (F) et collectée dans le réservoir de collecte (4).

19. Appareil (1) selon la revendication 18, dans lequel ledit dispositif (14) pour enlever les particules solides est un dispositif de filtrage avec des filtres interchangeables comprenant:
- un espace de collecte (16) du liquide de lavage filtré,
- un filtre en textile non tissé (17) disposé au-dessus dudit espace de collecte (16),
- des moyens (18, 19, 21) pour dérouler et puis enrouler le filtre en textile non tissé (17), et
- un capteur de niveau (20), adapté pour détecter un état engorgé du filtre (17) et pour activer le fonctionnement des moyens (18, 19, 21) pour dérouler et puis enrouler le filtre en textile non tissé (17).
